# EUROPÄISCHE PATENTSCHRIFT

(11) **EP 1 896 743 B1**
(45) Veröffentlichungstag und Bekanntmachung des Hinweises auf die Patenterteilung: **05.11.2008**
(21) Anmeldenummer: 06753241.6
(22) Anmeldetag: 03.06.2006
(51) Int. Cl.: F16D 13/64

(54) **KUPPLUNGSSCHEIBE**
CLUTCH DISC
DISQUE D'EMBRAYAGE

(30) Priorität: 24.06.2005 DE 102005029350
(43) Veröffentlichungstag der Anmeldung: 12.03.2008
(73) Patentinhaber: LuK Lamellen und Kupplungsbau Beteiligungs KG, 77815 Bühl (DE)
(72) Erfinder: HÄSSLER, Martin Dr., 76676 Graben-Neudorf (DE); KRAUS, Martin, 77830 Bühlertal (DE)
(86) Internationale Anmeldenummer: PCT/DE2006/000966
(87) Internationale Veröffentlichungsnummer: WO 2006/136131

(56) Entgegenhaltungen:
- EP-A- 1 593 868
- DE-A1- 10 041 216
- DE-C- 625 868
- GB-A- 477 794
- GB-A- 999 884

## Beschreibung

Die Erfindung betrifft eine Kupplungsscheibe, insbesondere zur Verwendung mit einer Kraftfahrzeugkupplung, mit einer Mitnehmerscheibe, an der zwei im Wesentlichen kreisringförmige Trägerscheiben für in axialer Richtung beabstandete Kupplungsbelagelemente befestigt sind.

Eine solche Kupplungsscheibe ist aus GB-A-999 884 bekannt.

Aufgabe der Erfindung ist es, eine Kupplungsscheibe, insbesondere zur Verwendung mit einer Kraftfahrzeugkupplung, mit einer Mitnehmerscheibe, an der zwei im Wesentlichen kreisringförmige Trägerscheiben für in axialer Richtung beabstandete Kupplungsbelagelemente befestigt sind, zu schaffen, die eine verbesserte axiale Vorspannung ermöglicht und kostengünstig herstellbar ist.

Die Aufgabe ist bei einer Kupplungsscheibe, insbesondere zur Verwendung mit einer Kraftfahrzeugkupplung, mit einer Mitnehmerscheibe, an der zwei im Wesentlichen kreisringförmige Trägerscheiben für in axialer Richtung beabstandete Kupplungsbelagelemente befestigt sind, dadurch gelöst, dass die Trägerscheiben in mindestens zwei radial beabstandeten Bereichen eine Vielzahl Federzungen aufweisen, die von den einander zugewandten Seiten der Trägerscheiben abstehen und in axialer Richtung voneinander beabstandete Abstützflächen aufweisen, die unter Ausbildung von Hinterschneidungen paarweise so angeordnet sind, dass die Abstützflächen unter Vorspannung an den in axialer Richtung gegenüberliegenden Kupplungsbelagelementen anliegen. Der Begriff axial bezieht sich auf die Drehachse der Kupplungsscheibe. Die Trägerscheiben dienen dazu, die Kupplungsbelagelemente zu verstärken. Außerdem wird durch die erfindungsgemäß gestalteten Trägerscheiben ein unerwünschter Verzug begrenzt. Die Kupplungsbelagelemente können jeweils ein- oder mehrteilig ausgebildet sein.

Ein bevorzugtes Ausführungsbeispiel der Kupplungsscheibe ist dadurch gekennzeichnet, dass sich die Federzungen in Umfangsrichtung der Trägerscheiben erstrecken. Diese Gestaltung der Federzungen hat sich im Rahmen der vorliegenden Erfindung als besonders vorteilhaft erwiesen.

Ein weiteres bevorzugtes Ausführungsbeispiel der Kupplungsscheibe ist dadurch gekennzeichnet, dass die Kupplungsbelagelemente im Bereich der Federzungen Durchgangslöcher aufweisen. Die Durchgangslöcher ermöglichen den Zugang zu den Federzungen bei der Montage beziehungsweise der Herstellung der Kupplungsscheibe.

Ein weiteres bevorzugtes Ausführungsbeispiel der Kupplungsscheibe ist dadurch gekennzeichnet, dass die Federzungen gleichmäßig über dem Umfang der Trägerscheiben verteilt angeordnet sind. Dadurch wird eine gleichmäßige Vorspannung der Kupplungsbelagelemente gewährleistet.

Ein weiteres bevorzugtes Ausführungsbeispiel der Kupplungsscheibe ist dadurch gekennzeichnet, dass die Trägerscheiben radial innen mehrere Befestigungsabschnitte aufweisen. Die Befestigungsabschnitte umfassen jeweils mehrere Durchgangslöcher zur Aufnahme von Befestigungsnieten, mit deren Hilfe die Trägerscheiben an der Mitnehmerscheibe befestigt sind.

Ein weiteres bevorzugtes Ausführungsbeispiel der Kupplungsscheibe ist dadurch gekennzeichnet, dass die Übergangsbereiche zu den Befestigungsabschnitten der Trägerscheiben jeweils mit einer axialen Wellung versehen sind. Dadurch wird zwischen den Trägerscheiben ein Aufnahmeraum für axiale Wellungen geschaffen, die an Federelementen vorgesehen sind, die zwischen den Trägerscheiben angeordnet sein können.

Ein weiteres bevorzugtes Ausführungsbeispiel der Kupplungsscheibe ist dadurch gekennzeichnet, dass zwischen den Trägerscheiben Federelemente angeordnet sind, die im Bereich der Federzungen Durchgangslöcher aufweisen. Vorzugsweise handelt es sich bei den Federelementen um Federsegmente, die paarweise in axialer Richtung zwischen den Trägerscheiben eingespannt sind. Die Durchgangslöcher ermöglichen den Durchgriff der Federzungen.

Ein weiteres bevorzugtes Ausführungsbeispiel der Kupplungsscheibe ist dadurch gekennzeichnet, dass die Federelemente radial innen jeweils einen Befestigungsabschnitt aufweisen. Der Befestigungsabschnitt umfasst zum Beispiel mehrere Durchgangslöcher zur Aufnahme von Befestigungsnieten, mit deren Hilfe die Federelemente zusammen mit den Trägerscheiben an der Mitnehmerscheibe befestigt sind.

Ein weiteres bevorzugtes Ausführungsbeispiel der Kupplungsscheibe ist dadurch gekennzeichnet, dass außen auf die Trägerscheiben jeweils mindestens ein Kupplungsbelagelement aufgeklebt ist. Durch die vorzugsweise vollflächige Verklebung der Kupplungsbelagelemente kann die komplette Belagfläche zum betriebsbedingten Verschleiß durch Reibung verwendet werden.

Ein weiteres bevorzugtes Ausführungsbeispiel der Kupplungsscheibe ist dadurch gekennzeichnet, dass die Trägerscheiben und/oder die Federelemente jeweils einstückig aus Federstahl gebildet sind. Dadurch werden eine einfache Herstellung und eine gute Federwirkung gewährleistet.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine perspektivische, teilweise aufgebrochene Darstellung einer erfindungsgemäßen Kupplungsscheibe;
- Figur 2: eine Trägerscheibe der Kupplungsscheibe aus Figur 1 in der Draufsicht;
- Figur 3: eine Federelement der Kupplungsscheibe aus Figur 1 in der Draufsicht und
- Figur 4: eine Explosionsdarstellung der erfindungsgemäßen Kupplungsscheibe.

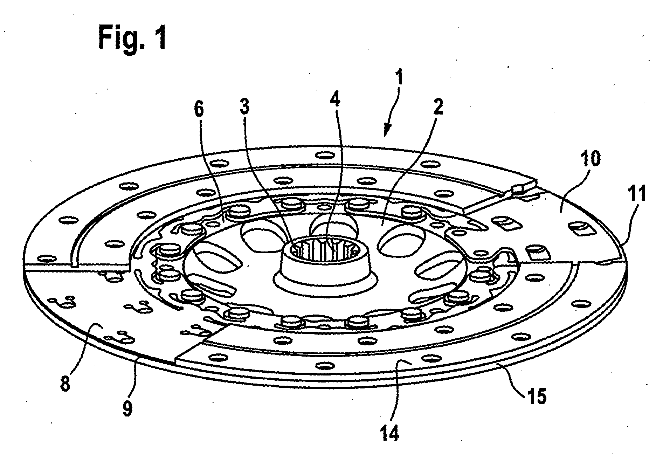

In Figur 1 ist eine erfindungsgemäße Kupplungsscheibe 1 perspektivisch dargestellt. Die Kupplungsscheibe 1 umfasst eine Mitnehmerscheibe 2, die radial innen eine Nabe 3 mit einer Innenverzahnung 4 aufweist. Die Innenverzahnung 4 dient dazu, die Nabe 3 der Mitnehmerscheibe 2 drehfest mit einer (nicht dargestellten) Getriebeeingangswelle zu verbinden. Radial außen weist die Mitnehmerscheibe 2 einen Ringflansch 6 mit einer Vielzahl von Durchgangslöchern auf, die dazu dienen, weitere Elemente der Kupplungsscheibe, zum Beispiel mit Hilfe von Nieten, an der Mitnehmerscheibe 2 zu befestigen.

An dem Ringflansch 6 der Mitnehmerscheibe 2 sind zwei Trägerscheiben 8, 9 sowie eine Vielzahl von Federelementen 10, 11 befestigt, die paarweise zwischen den Trägerscheiben 8, 9 angeordnet sind. Außen auf die Trägerscheiben 8, 9 sind Kupplungsbelagelemente 14, 15 aufgeklebt.

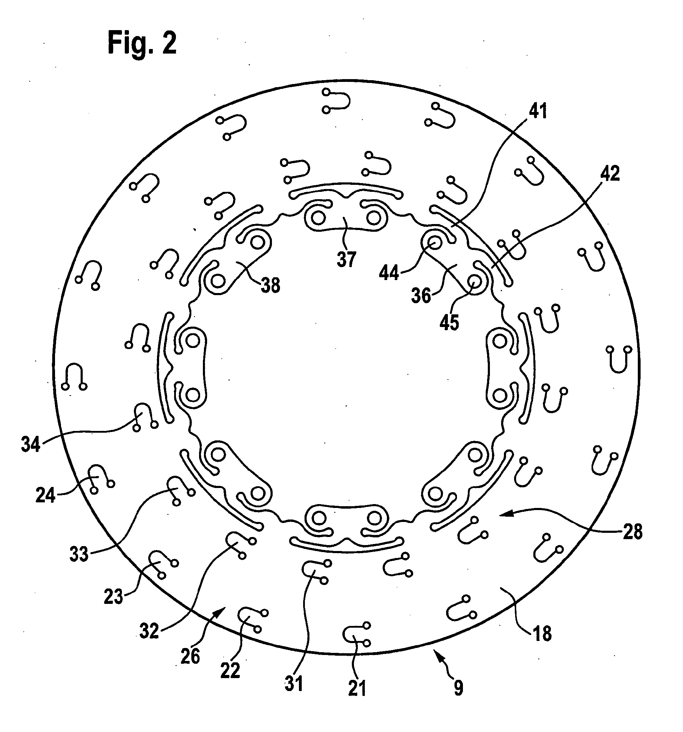

In Figur 2 ist die Trägerscheibe 9 allein in der Draufsicht dargestellt. In der Draufsicht sieht man, dass die Trägerscheibe 9 einen Kreisringscheibenkörper 18 aufweist, aus dem eine Vielzahl von Federzungen herausgebogen ist. Ein Teil der Federzungen 21 bis 24 sind in einem radial äußeren Bereich 26 des Kreisringscheibenkörpers 18 angeordnet. In einem radial inneren Bereich 28 des Kreisringscheibenkörpers 18 sind weitere Federzungen 31 bis 34 angeordnet. Insgesamt sind in dem radial äußeren Bereich 26 sechzehn Federzungen gleichmäßig über dem Umfang des Kreisringscheibenkörpers 18 verteilt. In dem radial inneren Bereich 28 sind ebenfalls sechzehn Federzungen gleichmäßig über dem Umfang des Kreisringscheibenkörpers 18 verteilt. Die Federzungen 21 bis 24, 31 bis 34 sind jeweils durch einen U-förmigen Einschnitt in dem Kreisringscheibenkörper 18 gebildet.

Radial innen gehen von dem Kreisringscheibenkörper 18 Befestigungsabschnitte 36 bis 38 aus, mit deren Hilfe die Trägerscheibe 9 an dem Ringflansch (6 in Figur 1) der Mitnehmerscheibe befestigt ist. Der Befestigungsabschnitt 36 ist durch Verbindungsstege 41, 42 einstückig mit dem Kreisringscheibenkörper 18 verbunden. Zwei Durchgangslöcher 44, 45 dienen in dem Befestigungsabschnitt 36 zum Durchführen von Befestigungsnieten, mit deren Hilfe die Trägerscheibe 9 an dem Ringflansch (6 in Figur 1) befestigbar ist.

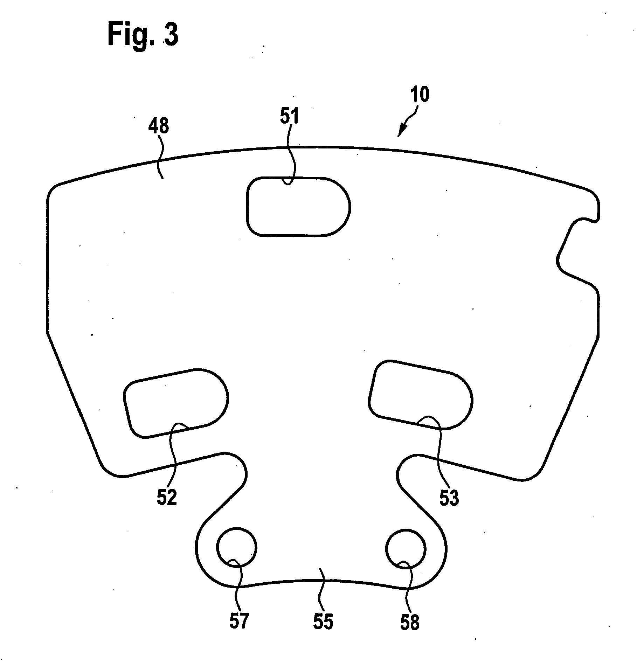

In Figur 3 ist das Federelement 10 allein in der Draufsicht dargestellt. Das Federelement 10 umfasst ein Federsegment 48, das drei Durchgangslöcher 51 bis 53 aufweist. Die Durchgangslöcher 51 bis 53 ermöglichen den Durchgriff der Federzungen, die von den Trägerscheiben abstehen. Radial innen geht von dem Federsegment 48 ein Befestigungsabschnitt 55 aus, der zwei Durchgangslöcher 57, 58 aufweist. Die Durchgangslöcher 57, 58 dienen zum Durchführen von Nieten, mit deren Hilfe das Federelement 10 an dem Ringflansch (6 in Figur 1) befestigbar ist.

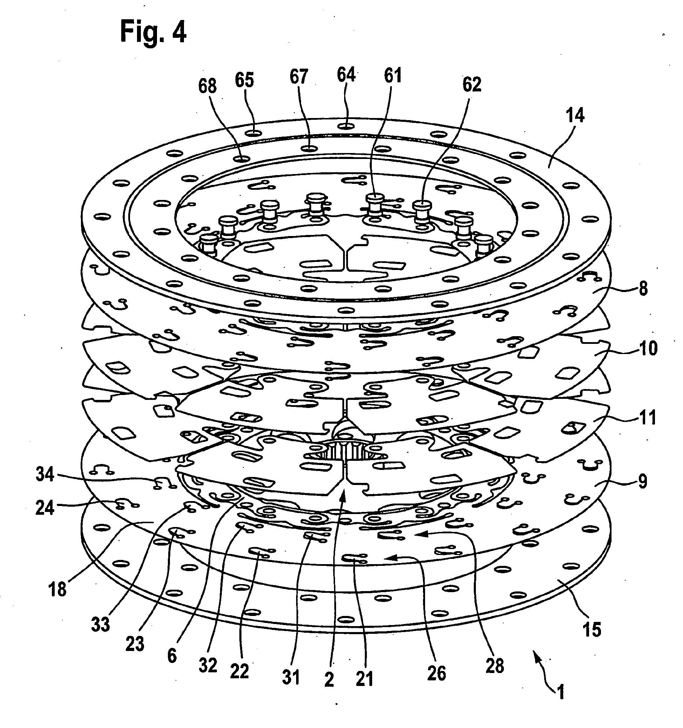

In Figur 4 ist eine Explosionsdarstellung der erfindungsgemäßen Kupplungsscheibe 1 dargestellt. In der Explosionsdarstellung sieht man, dass die beiden im Wesentlichen kreisringförmigen Trägerscheiben 8, 9, auf welche die Kupplungsbelagelemente 14, 15 aufgepresst oder aufgeklebt sind, in den beiden radial beabstandeten Bereichen 26, 28 eine gleichmäßig am Umfang verteilte Vielzahl von U-förmigen Einschnitten aufweisen, welche die in Umfangsrichtung verlaufenden Federzungen 21 bis 24, 31 bis 34 herausbilden. Die Federzungen der Trägerscheibe 8 werden im zusammengebauten Zustand der Kupplungsscheibe zur Hinterschneidung mit entsprechenden Federzungen der gegenüberliegenden Trägerscheibe 9 gebracht. Die dadurch erzeugte interne Vorspannung dient als Maßnahme gegen Verzug.

Um für die Montage Zugang zu den Federzungen zu erhalten, ist das darüber liegende Belagmaterial im Bereich der Federzungenspitzen mit Bohrungen 64, 65, 67, 68 versehen. Um die Hinterschneidung der Federzungen zu ermöglichen, weisen die zwischen den Trägerscheiben 8, 9 befindlichen Federelemente 10, 11 der Belagfederung entsprechende Durchgangslöcher (51 bis 53 in Figur 3) auf. Die Trägerscheiben 8, 9 sind außerhalb des Bereichs mit den Kupplungsbelagelementen 14, 15 mit ihren Befestigungsabschnitten zusammen mit den Befestigungsabschnitten der Federelemente als Paket von jeweils vier Blechen an die Mitnehmerscheibe 2 genietet. Pro Paket sind jeweils zwei Nieten 61, 62 vorgesehen.

Durch die erfindungsgemäße Kupplungsscheibe 1 können die folgenden Vorteile erzielt werden: Gleichzeitige Nutzung der Trägerscheiben 8, 9 als Verstärkungsblech für das Belagmaterial, als Element für die Momentenübertragung und als Mittel zur Begrenzung der axialen Ausdehnung; gute Abstützung der Beläge durch mehrfach gewellte Doppelsegmente; Erhöhung des als Verschleiß nutzbaren Anteils des insgesamt eingesetzten Belagmaterials durch Wegfall von Nieten im Bereich des Belagmaterials; Einzelteile können als identische Teile für die Schwungrad- und die Anpressplattenseite verwendet werden; das Belagmaterial kann auch in Form von Kreisringsegmenten, so genannten Pads, angebracht werden. Durch die Erfindung wird eine dünne Kupplungsscheibe mit Trägerscheiben zur Verwendung mit aufgepresstem Belagmaterial geschaffen. Die Trägerscheiben stellen die Berstfestigkeit sicher, übertragen das Moment auf die Mitnehmerscheibe und stellen durch die verschränkten Federzungen den axialen Zusammenhalt her.

### Bezugszeichenliste

- 1.: Kupplungsscheibe
- 2.: Mitnehmerscheibe
- 3.: Nabe
- 4.: Innenverzahnung
- 6.: Ringflansch
- 8.: Trägerscheibe
- 9.: Trägerscheibe
- 10.: Federelement
- 11.: Federelement
- 14.: Kupplungsbelagelement
- 15.: Kupplungsbelagelement
- 18.: Kreisringscheibenkörper
- 21.: Federzunge
- 22.: Federzunge
- 23.: Federzunge
- 24.: Federzunge
- 26.: radial äußerer Bereich
- 28.: radial innerer Bereich
- 31.: Federzunge
- 32.: Federzunge
- 33.: Federzunge
- 34.: Federzunge
- 36.: Befestigungsabschnitt
- 37.: Befestigungsabschnitt
- 38.: Befestigungsabschnitt
- 41.: Verbindungssteg
- 42.: Verbindungssteg
- 44.: Durchgangsloch
- 45.: Durchgangsloch
- 48.: Federsegment
- 51.: Durchgangsloch
- 52.: Durchgangsloch
- 53.: Durchgangsloch
- 55.: Befestigungsabschnitt
- 57.: Durchgangsloch
- 58.: Durchgangsloch
- 61.: Niet
- 62.: Niet
- 64.: Durchgangsloch
- 65.: Durchgangsloch
- 67.: Durchgangsloch
- 68.: Durchgangsloch

## Patentansprüche

1. Kupplungsscheibe, insbesondere zur Verwendung mit einer Kraftfahrzeugkupplung, mit einer Mitnehmerscheibe (2), an der zwei im Wesentlichen kreisringförmige Trägerscheiben (8,9) für in axialer Richtung beabstandete Kupplungsbelagelemente (14,15) befestigt sind, **dadurch gekennzeichnet, dass** die Trägerscheiben (8,9) in mindestens zwei radial beabstandeten Bereichen (26,28) eine Vielzahl Federzungen (21-24,31-34) aufweisen, die von den einander zugewandten Seiten der Trägerscheiben (8,9) abstehen und in axialer Richtung voneinander beabstandete Abstützflächen aufweisen, die unter Ausbildung von Hinterschneidungen paarweise so angeordnet sind, dass die Abstützflächen unter Vorspannung an den in axialer Richtung gegenüberliegenden Kupplungsbelagelementen (15,14) anliegen.

2. Kupplungsscheibe nach Anspruch 1, **dadurch gekennzeichnet, dass** sich die Federzungen (21-24,31-34) in Umfangsrichtung der Trägerscheiben (8,9) erstrecken.

3. Kupplungsscheibe nach einem der vorhergehenden Ansprüche, **dadurch gekennzeichnet, dass** die Kupplungsbelagelemente (14,15) im Bereich der Federzungen (21-24,31-34) Durchgangslöcher (64,65,67,68) aufweisen.

4. Kupplungsscheibe nach einem der vorhergehenden Ansprüche, **dadurch gekennzeichnet, dass** die Federzungen (21-24,31-34) gleichmäßig über dem Umfang der Trägerscheiben (8,9) verteilt angeordnet sind.

5. Kupplungsscheibe nach einem der vorhergehenden Ansprüche, **dadurch gekennzeichnet, dass** die Trägerscheiben (8,9) radial innen mehrere Befestigungsabschnitte (36-38) aufweisen.

6. Kupplungsscheibe nach Anspruch 5, **dadurch gekennzeichnet, dass** die Übergangsbereiche zu den Befestigungsabschnitten (36-38) der Trägerscheiben (8,9) jeweils mit einer axialen Wellung versehen sind.

7. Kupplungsscheibe nach einem der vorhergehenden Ansprüche, **dadurch gekennzeichnet, dass** zwischen den Trägerscheiben (8,9) Federelemente (10,11) angeordnet sind, die im Bereich der Federzungen Durchgangslöcher (51-53) aufweisen.

8. Kupplungsscheibe nach Anspruch 7, **dadurch gekennzeichnet, dass** die Federelemente (10,11) radial innen jeweils einen Befestigungsabschnitt (55) aufweisen.

9. Kupplungsscheibe nach einem der vorhergehenden Ansprüche, **dadurch gekennzeichnet, dass** außen auf die Trägerscheiben (8,9) jeweils mindestens ein Kupplungsbelagelement (14,15) aufgeklebt ist.

10. Kupplungsscheibe nach einem der Ansprüche 7-8, **dadurch gekennzeichnet, dass** die Trägerscheiben (8,9) und/oder die Federelemente (10,11) jeweils einstückig aus Federstahl gebildet sind.

## Claims

1. Clutch plate, in particular for use with a motor-vehicle clutch, having a driver plate (2), to which two substantially circularly annular carrier plates (8, 9) are fastened for clutch lining elements (14, 15) which are spaced apart in the axial direction, **characterized in that** the carrier plates (8, 9) have a multiplicity of spring tongues (21-24, 31-34) in at least two regions (26, 28) which are spaced apart radially, which spring tongues (21-24, 31-34) protrude from those sides of the carrier plates (8, 9) which face one another and have supporting faces which are spaced apart from one another in the axial direction and, with the formation of undercuts, are arranged in pairs in such a way that the supporting faces bear with prestress against the clutch lining elements (15, 14) which lie opposite in the axial direction.

2. Clutch plate according to Claim 1, **characterized in that** the spring tongues (21-24, 31-34) extend in the circumferential direction of the carrier plates (8, 9).

3. Clutch plate according to one of the preceding claims, **characterized in that** the clutch lining elements (14, 15) have through holes (64, 65, 67, 68) in the region of the spring tongues (21-24, 31-34).

4. Clutch plate according to one of the preceding claims, **characterized in that** the spring tongues (21-24, 31-34) are arranged such that they are distributed uniformly over the circumference of the carrier plates (8, 9).

5. Clutch plate according to one of the preceding claims, **characterized in that** the carrier plates (8, 9) have a plurality of fastening sections (36-38) radially on the inside.

6. Clutch plate according to Claim 5, **characterized in that** the transition regions to the fastening sections (36-38) of the carrier plates (8, 9) are provided in each case with an axial undulation.

7. Clutch plate according to one of the preceding claims, **characterized in that** spring elements (10, 11) which have through holes (51-53) in the region of the spring tongues are arranged between the carrier plates (8, 9).

8. Clutch plate according to Claim 7, **characterized in that** the spring elements (10, 11) have in each case one fastening section (55) radially on the inside.

9. Clutch plate according to one of the preceding claims, **characterized in that** in each case at least one clutch lining element (14, 15) is adhesively bonded onto the carrier plates (8, 9) on the outside.

10. Clutch plate according to either of Claims 7 and 8, **characterized in that** the carrier plates (8, 9) and/or the spring elements (10, 11) are formed in each case in one piece from spring steel.

## Revendications

1. Disque d'embrayage, en particulier pour l'utilisation avec un embrayage de véhicule automobile comprenant un disque d'entraînement (2), sur lequel sont fixés deux disques de support (8, 9) essentiellement annulaires circulaires, pour des éléments de garniture d'embrayage (14, 15) espacés dans la direction axiale, **caractérisé en ce que** les disques de support (8, 9) présentent, dans au moins deux régions (26, 28) espacées radialement, une pluralité de langues de ressort (21-24, 31-34), qui dépassent des côtés tournés l'un vers l'autre des disques de support (8, 9), et qui présentent des surfaces de support espacées l'une de l'autre dans la direction axiale, qui sont disposées par paire en formant des contre-dépouilles de telle sorte que les surfaces de support s'appliquent sous l'effet de leur précontrainte contre les éléments de garniture d'embrayage (15, 14) opposés dans la direction axiale.

2. Disque d'embrayage selon la revendication 1, **caractérisé en ce que** les langues de ressort (21-24, 31-34) s'étendent dans la direction circonférentielle des disques de support (8, 9).

3. Disque d'embrayage selon l'une quelconque des revendications précédentes, **caractérisé en ce que** les éléments de garniture d'embrayage (14, 15) présentent des trous de passage (64, 65, 67, 68) dans la région des langues de ressort (21-24, 31-34).

4. Disque d'embrayage selon l'une quelconque des revendications précédentes, **caractérisé en ce que** les langues de ressort (21-24, 31-34) sont réparties de manière uniforme sur la circonférence des disques de support (8, 9).

5. Disque d'embrayage selon l'une quelconque des revendications précédentes, **caractérisé en ce que** les disques de support (8, 9) présentent radialement à l'intérieur plusieurs portions de fixation (36-38).

6. Disque d'embrayage selon la revendication 5, **caractérisé en ce que** les régions de transition aux portions de fixation (36-38) des disques de support (8, 9) sont à chaque fois pourvues d'une ondulation axiale.

7. Disque d'embrayage selon l'une quelconque des revendications précédentes, **caractérisé en ce que** des éléments de ressort (10, 11) sont disposés entre les disques de support (8, 9), et présentent des trous de passage (51-53) dans la région des langues de ressort.

8. Disque d'embrayage selon la revendication 7, **caractérisé en ce que** les éléments de ressort (10, 11) présentent radialement à l'intérieur à chaque fois une portion de fixation (55).

9. Disque d'embrayage selon l'une quelconque des revendications précédentes, **caractérisé en ce qu'**à chaque fois au moins un élément de garniture d'embrayage (14, 15) est collé à l'extérieur sur les disques de support (8, 9).

10. Disque d'embrayage selon l'une quelconque des revendications 7 à 8, **caractérisé en ce que** les disques de support (8, 9) et/ou les éléments de ressort (10, 11) sont à chaque fois réalisés d'une seule pièce en acier à ressort.
